# EUROPEAN PATENT SPECIFICATION

(11) **EP 2 358 522 B1**
(45) Date of publication and mention of the grant of the patent: **12.02.2014**
(21) Application number: 08875453.6
(22) Date of filing: 12.12.2008
(51) Int. Cl.: B32B 5/26, D04H 3/02, D04H 5/02, D04H 5/06, D06N 5/00, D06N 7/00

(54) **TEXTILE SUPPORT FOR BITUMINOUS MEMBRANE WITH HIGH DIMENSIONAL STABILITY, PARTICULARLY FOR WATERPROOFING BUILDINGS**
TEXTILE TRÄGER FÜR BITUMINÖSE MEMBRAN MIT HOHER FORMSTABILITÄT, INSBESONDERE ZUR WASSERABDICHTUNG VON GEBÄUDEN
SUPPORT TEXTILE POUR MEMBRANE BITUMINEUSE AVEC STABILITÉ DIMENSIONNELLE ÉLEVÉE, EN PARTICULIER POUR ÉTANCHÉIFIER DES BÂTIMENTS

(43) Date of publication of application: 24.08.2011
(73) Proprietor: POLITEX s.a.s. di FREUDENBERG POLITEX s.r.l., 20121 Milan (IT)
(72) Inventor: MIGLIAVACCA, Massimo, I-20123 Milano (IT); TURRI, Stefano, 20861 Brugherio (MB) (IT); LEVI, Marinella, I-20155 Milano (IT)
(74) Representative: Mittler, Enrico
(86) International application number: PCT/EP2008/067446
(87) International publication number: WO 2010/066307

(56) References cited:
- US-A- 5 776 841

## Description

The use is known, in building, of bituminous membranes for waterproofing the roofs of buildings or of sealing surfaces. The use is also known of non-woven textile material produced from polyester fibres as a textile support within said membranes.

These articles, on the one hand, require great dimensional stability both during laying and during ageing; on the other hand they are subjected in the course of manufacture to significant stresses, both mechanical and thermal.

These membranes are in fact made by impregnating the textile supports in a bath of bituminous mixtures maintained at a temperature that can reach 200°C; during processing, furthermore, the textile support undergoes mechanical stresses, typically traction strains predominantly in a longitudinal direction, which can even bring about significant deformation because of the joint action of the temperature of the mass of bitumen and the above-mentioned traction strains.

At the end of this procedure, the membranes are cooled, and rolled so that they can subsequently be sold, ready for laying on buildings. If the support has undergone significant stress and/or deformation (elongation or shrinkage) during the process, internal tensions are generated which remain in the finished product (bituminous membrane) as a result of cooling in conditions where relaxation is prevented. These latent tensions are released as soon as sufficient energy is supplied to the product to activate them, for example during heating as part of the laying operation, or as a result of solar radiation. The consequences include shrinkage and distortion which can cause the formation of undulations, and can even cause the joints to slide until the impermeability of the membrane is compromised.

For this reason the search has been developed for systems which can increase the strength and the stability of the supports, especially by the use of various kinds of reinforcement.

In particular, supports have been perfected which use as reinforcement threads arranged in a longitudinal direction, made up of inorganic and/or organic fibres, inserted between two layers of polymeric material, mechanically, thermally and chemically linked so as to improve the mechanical performance of the composite support at the stage of production of the membrane.

For example, US-A-5118550 uses glass filaments as reinforcing threads, which confer on the product a high modulus of elasticity in a longitudinal direction, both at room temperature and, especially, at the temperatures at which it is impregnated with bitumen.

The efficacy of the reinforcing action of the glass filaments in relation to the fibrous structure, measured in terms of the increase in the modulus of elasticity of the material in a longitudinal direction, compared with a support which lacks reinforcing fibres, depends essentially on the quality of the mechanical and chemical bonding between the two layers into which the reinforcing thread itself is inserted.

The mechanical and chemical bonding prevents the glass threads from sliding within the two layers of non-woven textile, both in a transverse and in a longitudinal direction.

It is obvious that preventing the filaments from sliding in a longitudinal direction is in large part dependent on the characteristics of the chemical bonding agent (generally styrol-acrylic or styrol-butadiene resins) and on chemical and physical adhesion forces which are established between the glass reinforcing fibres and the polymeric matrix of the non-woven textile.

These forces and the efficacy of the bond are strongly influenced by temperature.

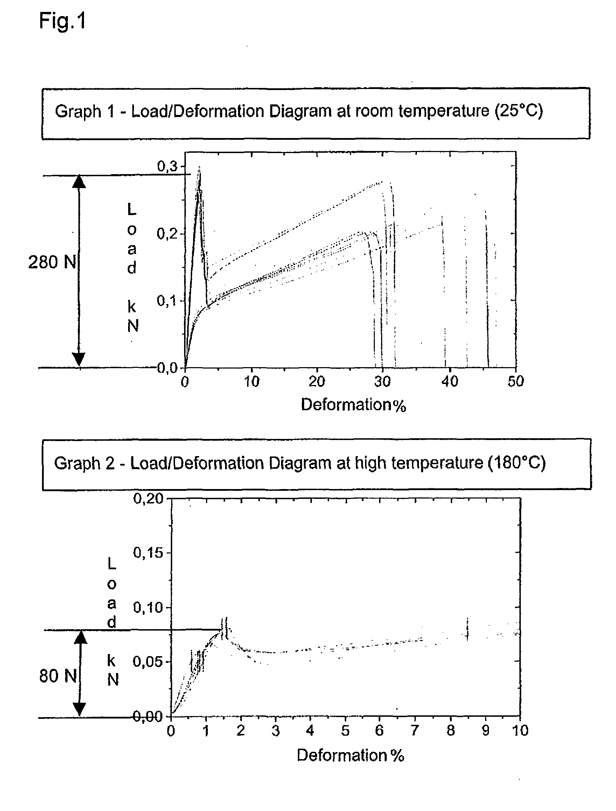

As is obvious from a comparison between graphs 1 and 2 in Figure 1, there is a significant deterioration in the mechanical characteristics (modulus of elasticity and yield peak) of the support for coverings when stressed at high temperature compared with the same support stressed at room temperature.

This deterioration is a consequence precisely of the reduction in the forces of cohesion between the fibrous matrix and the reinforcing filaments.

The modulus of elasticity of composite materials, in particular of reinforced non-woven textiles, is strongly influenced by the intensity of the superficial bonds which are established between the fibrous matrix and the reinforcing filaments. The greater the collaboration between the two components, the better will be the performance of the composite, exploiting to the maximum the peculiar characteristics of each of the components (in the specific case, the mechanical strength of the reinforcement and the elasticity and tenacity of the matrix).

In the case of the support in question, whose matrix is made up of polyester fibre and whose reinforcement is provided by glass filaments, the collaboration between the two components has been optimised by the addition of an additive to the surface of the glass filaments which increases the forces of cohesion between the inorganic filaments of the reinforcement and the organic fibres of the matrix through the formation of chemical bonds.

US-A-5776841 discloses a sheet felt including glass fibres treated with a sizing agent.

The object of the present invention is to further increase the forces of adhesion between the glass reinforcing threads and the fibrous polymeric matrix under all temperature conditions.

This object is achieved by means of a textile support for a bituminous membrane, comprising, the combination of at least two layers of non-woven polyester or polymeric material in general and of a plurality of longitudinal reinforcing threads, which reinforcing have been treated in advance with a size which allows the formation of stable chemical bonds, not strongly influenced by temperature.

The chemical bond which is thus established intimately bonds the surface of the reinforcing threads, particularly if these consist of glass filaments, and the functional groups present in the fibrous matrix of the non-woven layers or present in the added chemical bonding agent.

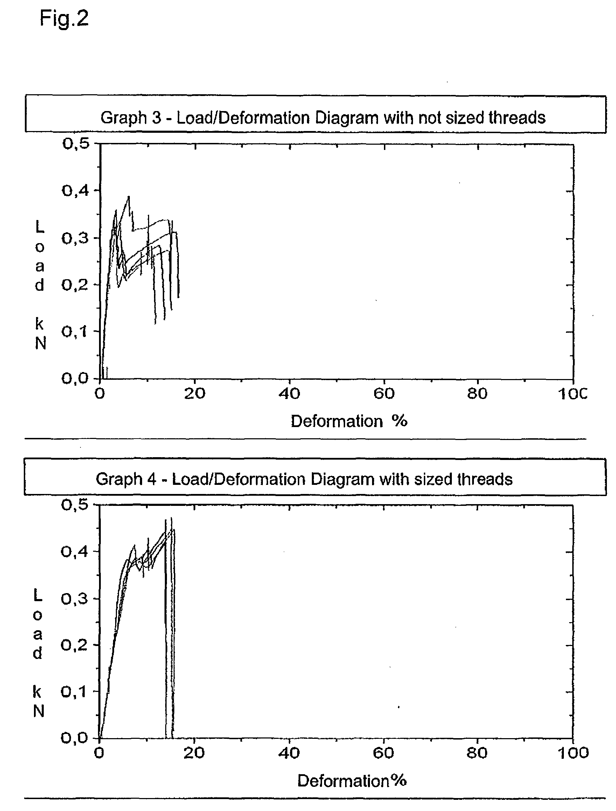

The increase in the forces of adhesion achieved as a result of the present invention, observable from graphs 3 and 4 in Figure 2, enables an improvement in the mechanical performance of the support for bituminous membranes, by increasing the longitudinal elastic modulus, especially in temperature conditions typical of the procedure for impregnation with bitumen.

The support for bituminous membranes produced according to the present invention is capable of tolerating the mechanical stresses which are generated in the impregnation process without undergoing excessive deformation, thus allowing the production of bituminous membranes of better quality, characterised by high dimensional stability.

The support in question, as a result of its better mechanical performance, also enables an increase in the speed of production of the membranes, thus allowing significant reductions in their production costs.

The non-woven textile layers can be made up of polyester flock fibres, or of an intimate mixture of thermoplastic fibres, typically polyester, but also polyamide 6 or 66, PBT etc., or of films of continuous threads deposited on a mesh.

These and other characteristics of the present invention will be made clearer by the following description of a practical embodiment thereof, described without limiting effect by reference to the attached drawings, wherein:
Figure 3 shows in perspective a textile support according to the present invention;
Figure 4 shows said textile support in transverse section;
Figures 5 and 6 show two alternative procedures for applying the size.

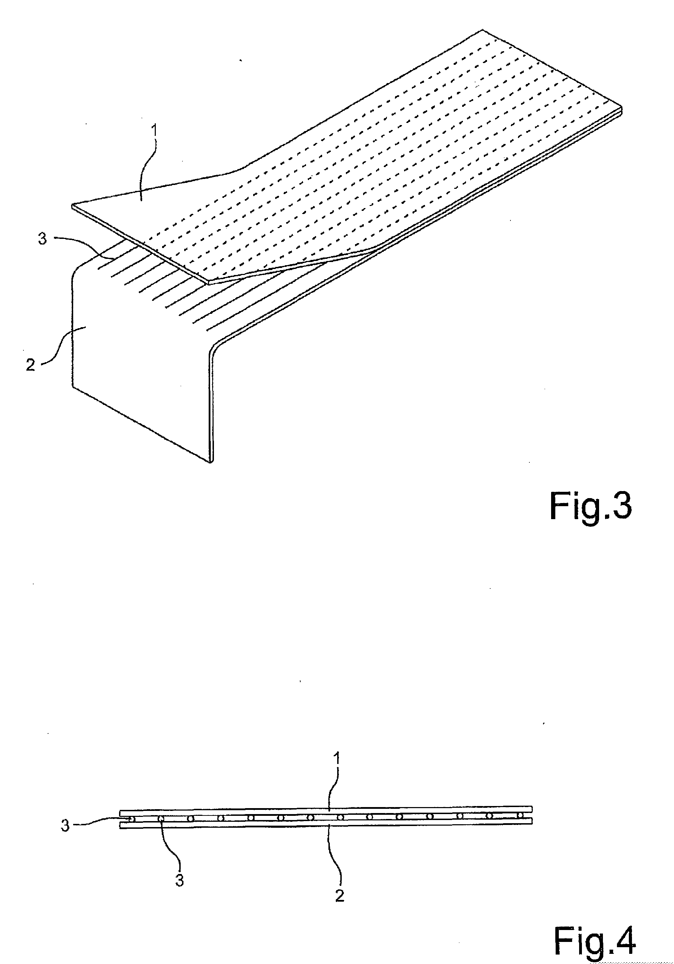

As shown in Figures 3 and 4, a textile support according to the present invention can be produced by means of the formation of at least two non-woven textile layers 1 and 2, formed of synthetic polymer flock fibres, oriented in transverse and longitudinal directions, reinforced in the working direction by having said reinforcing filaments 3 resting on one side of, or being inserted between, the above-mentioned layers.

The composite made up of the non-woven textile layers and the reinforcing threads is then consolidated by mechanical needling, undergoes a thermal stabilisation treatment and impregnation with resins, acrylic-based for example, which are polymerised in the subsequent stage of oven-drying.

As an alternative to the polyester flock fibre, it would be possible to use a flock fibre produced from another thermoplastic polymer, such as for example Nylon 6, Nylon 66, PBT or other polymeric material characterised by a melting temperature higher than 230°C.

The reinforcing filaments typically consist of glass fibres, but could also be of other inorganic material, having a Young's modulus greater than 20GPa and preferably greater than 50GPa, and are arranged parallel to each other and regularly spaced at between 5 and 30 mm.

The consolidation of the composite formed by the layers of polymer flock fibres and reinforcing filaments is performed by mechanical needling, but could also be performed by bonding with water.

As an alternative to the use of carded flock fibres for forming the layers described above, a spun-bonded process can be used, in which the layers are made up of films of continuous threads deposited on a mesh, by means of an aerodynamic system.

As an alternative to an acrylic type of bonding agent, a pure styrene-, styrol-acrylic- or styrol-butadiene-based resin could be used, or resin mixed with cross-linking agents with a urea-formaldehyde base, or melamine, vinyl or a self-cross-linking resin without formaldehyde.

The bonding material can have a carboxylic -COOH group, capable of creating chemical bonds with a hydroxyl -OH group belonging to the fibres constituting the polymeric layers, so as to improve the mechanical strength of the product.

The reinforcing filaments are treated in advance by the application of a specific additive (size) for increasing the adhesion capacity between polymeric fibre and glass threads, in aqueous solution.

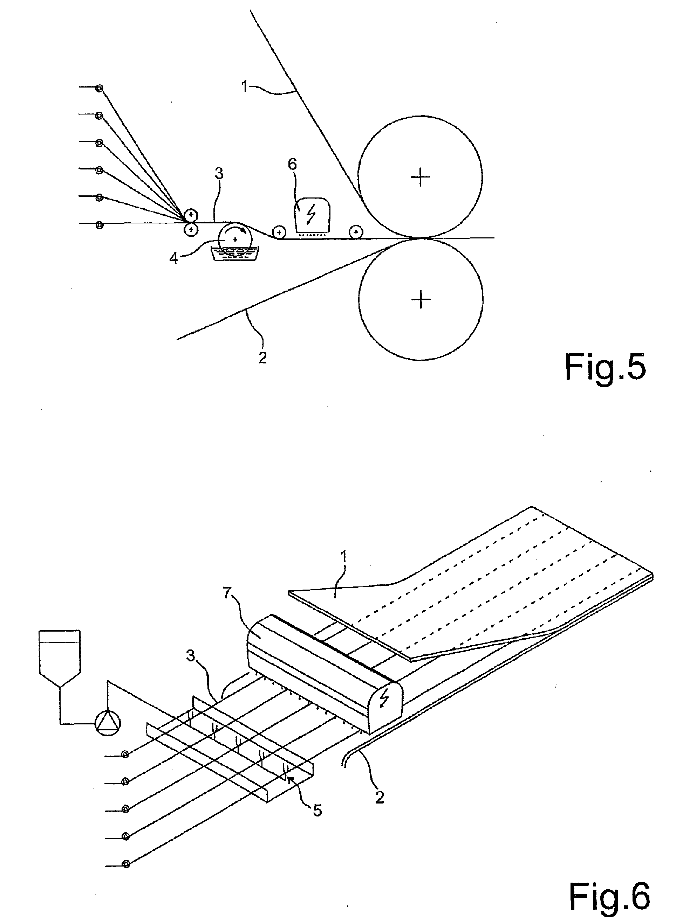

The treatment of the reinforcing filaments can be performed by means of an applicator cylinder (kiss roll) 4 (Figure 5) or by means of dampening thread guides 5 (Figure 6), in both cases in combination with a fixative device 6.

The additive mentioned above contains at least a percentage of a silanizing agent, between 0.1 % and 20% by weight, typically forming 1% of the solution. The silane can be chosen between various categories such as for example glycidoxypropyltrimethoxysilane or aminopropryl-trimethoxysilane or even another silane belonging to other families not described above, which are distinguished by the functional group of the bond with the resin.

The additive contains furthermore a filmogenic agent, capable of improving the adhesion characteristics between the reinforcing fibre and the polyester matrix and between the glass and the resin, in proportions which can vary between 1% and 20%, typically 7.5%.

By way of demonstration, the graphs in Figure 2 include a comprehensive, but not exhaustive example which demonstrates the characteristics of a support for a bituminous membrane reinforced with sized glass threads, tried out during laboratory tests conducted at room temperature.

The increase in performance is self-evident; the table below also sets out the increase in absolute terms (expressed in Mpa) of the breaking strain required in the various situations shown in the above-mentioned graphs:

| | untreated reinforcements | sized reinforcements |
|---|---|---|
| Traction tests at 25°C | 4.38 MPa | 5.10 MPa |
| Traction tests at 180°C | 0.74 MPa | 0.97 MPa |

The textile support thus produced can have a basis weight varying from 50 gsm to 350 gsm, with a percentage of resin as a proportion of the total mass of the support, varying from 5% to 35%.

A support for a bituminous membrane as described above enables significant increases to be achieved in resistance to tolerable strain, therefore improving the dimensional stability of the membranes produced from it.

A support thus produced will be characterised by:
- high initial modulus at room temperature,
- high modulus at high temperature,
- better performance in terms of workability and processability,
- greater dimensional stability of the membrane produced.

## Claims

1. Textile support for bituminous membrane, particularly for the waterproofmg of buildings, comprising the combination of at least two layers (1,2) of non-woven polyester or polymeric material in general and of a plurality of longitudinal reinforcing filaments (3), which reinforcing filaments (3) have been treated in advance with a size which permits the formation of stable chemical bonds, not strongly influenced by temperature.

2. Support according to claim 1, **characterised in that** said non-woven layers (1, 2) and said reinforcing filaments (3) are bonded through the action of at least one bonding material.

3. Support according to claim 2, **characterised in that** said reinforcing filaments (3) consist of inorganic fibres, preferably glass fibres, possibly combined with polymeric reinforcing filaments.

4. Support according to claim 1, **characterised in that** said size consists of a mixture of silanizing and filmogenic agents,

5. Support according to claim 4, **characterised in that** said silanizing agents can belong to the family of organosilanes and are preferentially glycidoxypropyltrimethoxysilane or even aminopropryl-trimethoxysilane.

6. Support according to claim 4 or 5, **characterised in that** said filmogenic agents consist of resins with a base of unsaturated or saturated polyesters or with an epoxy or polyurethane base.

7. Support according to any of claims 4 to 6, **characterised in that** said size allows the formation of chemical bridges between functional groups (hydroxides or carboxyls or acrylics or epoxies) of the fibres constituting the polymeric matrix, or rather of the impregnating resin and the surface of the fibres constituting the reinforcement.

8. Support according to any of claims 4 to 7, **characterised in that** the size is applied to the above-mentioned reinforcing filaments by means of cylindrical applicators (4).

9. Support according to any of claims 4 to 7, **characterised in that** the size is applied to the above-mentioned reinforcing filaments by means of guidable dampeners (5).

10. Support according to anyone of claims 8 and 9, **characterised in that** said size is fixed to the surface of the reinforcing filament (3) by means of fixative devices (6) with IR technology, UV wave or even microwave technology, or simply with steam heating or jets of superheated air.

11. Support according to claim 2, **characterised in that** the resin constituting the bonding material is a self-cross-linking resin without formaldehyde.

12. Support according to anyone of claims 1 to 3, **characterised in that** said non-woven layers (1, 2) consist of layers of polymeric and/or synthetic fibres formed by carding of flock fibres.

13. Support according to any of claims 1 to 3, **characterised in that** said non-woven layers (1, 2) consist of layers of polymeric filaments, formed through direct spinning (spunbonded).

14. Support according to claim 11, wherein the non-woven layers (1, 2) are formed by carding of intimate mixtures of polymeric fibres and low-melting fibres, so as to be suitable for being consolidated by thermal bonding.

15. Support according to claim 12, wherein the non-woven layers (1, 2) are formed from filaments extruded from homopolymer mixed with filaments extruded from low-melting polymer, so as to be suitable for being consolidated by thermal bonding.

16. Support according to any preceding claim, **characterised in that** said reinforcing filaments (3) are arranged in a longitudinal and/or diagonal direction.

17. Support according to any preceding claim, **characterised by** having a mass per unit area of between 50 gsm and 350 gsm.

## Patentansprüche

1. Textiler Träger für bituminöse Membranen, insbesondere zur Wasserabdichtung von Gebäuden, welche die Kombination aus wenigstens zwei Schichten (1, 2) eines Polyestervliesmaterials oder polymeren Vliesmaterials im allgemeinen und einer Mehrzahl von Längsverstärkungsfilamenten (3) aufweist, wobei die Filamente (3) zuvor mit einem Schlichtemittel behandelt sind, welches die Bildung von stabilen chemischen Bindungen erlaubt, die nicht durch Temperaturen stark beeinflusst sind.

2. Träger nach Anspruch 1, **dadurch gekennzeichnet, dass** die Vliesstoffschichten (1, 2) und die Verstärkungsfilamente (3) durch die Wirkung von wenigstens einem Bindematerial haftend verbunden sind.

3. Träger nach Anspruch 2, **dadurch gekennzeichnet, dass** die Verstärkungsfilamente aus anorganischen Fasern, vorzugsweise Glasfasern, bestehen, die ggfs. mit polymeren Verstärkungselementen kombiniert sind.

4. Träger nach Anspruch 1, **dadurch gekennzeichnet, dass** das Schlichtemittel aus einer Mischung aus silanbildenden Mitteln und filmbildenden Mitteln besteht.

5. Träger nach Anspruch 4, **dadurch gekennzeichnet, dass** die silanbildenden Mittel zu der Familie von Organosilanen gehören und vorzugsweise von Glyzidoxypropyltrimethoxylanen oder sogar von Aminopropryl-Trimethoxylanen gebildet werden.

6. Träger nach Anspruch 4 oder 5, **dadurch gekennzeichnet, dass** die filmbildenden Mittel Harze mit einer Basis von ungesättigten oder gesättigten Polyestern oder mit einer Epoxi- oder Polyurthanbasis aufweisen.

7. Träger nach einem der Ansprüche 4 bis 6, **dadurch gekennzeichnet, dass** das Schlichtemittel die Bildung von chemischen Brücken zwischen den funktionellen Gruppen (Hydroxide oder Carboxile oder Acryle oder Epoxi) der Fasern bilden, welche die polymere Matrix bilden, oder eher von dem imprägnierenden Harz an der Oberfläche der Fasern gebildet wird, welche die Verstärkung bilden.

8. Träger nach einem der Ansprüche 4 bis 7, **dadurch gekennzeichnet, dass** das Schlichtemittel auf die zuvor angegebenen Verstärkungsfilamente mit Hilfe von zylindrischen Applikatoren aufgebracht wird.

9. Träger nach einem der Ansprüche 4 bis 7, **dadurch gekennzeichnet, dass** das Schlichtemittel auf die zuvor beschriebenen Verstärkungsfilamente mit Hilfe von führbaren Dämpfern (5) aufgebracht wird.

10. Träger nach einem der Ansprüche 8 und 9, **dadurch gekennzeichnet, dass** das Schlichtemittel auf der Oberfläche der Verstärkungsfilamente (3) mit Hilfe von Fixiereinrichtungen (6) basierend auf IR-Technologie, UV-Wellen oder sogar basierend auf Mikrowellentechnologie oder einfach mittels Dampferhitzen oder mittels Strahlen von überhitzter Luft fixiert wird.

11. Träger nach Anspruch 2, **dadurch gekennzeichnet, dass** das das Bindematerial bildende Harz ein selbstvernetzendes Harz ohne Formaldehyd ist.

12. Träger nach einem der Ansprüche 1 bis 3, **dadurch gekennzeichnet, dass** die Vliesstoffschichten (1, 2) Schichten aus polymeren und/oder synthetischen Fasern umfassen, die durch Kardieren von Flockfasern gebildet werden.

13. Träger nach einem der Ansprüche 1 bis 3, **dadurch gekennzeichnet, dass** die Vliesstoffschichten (1, 2) aus Schichten von polymeren Filamenten gebildet werden, welche durch direktes Spinnen gebildet werden (Spinnvlies).

14. Träger nach Anspruch 11, **dadurch gekennzeichnet, dass** die Vliesstoffschichten (1, 2) dadurch gebildet werden, dass eine innige Mischung aus polymeren Fasern und niedrigschmelzenden Fasern mittels Kardieren derart gebildet wird, dass sie geeignet sind, mittels eines Thermobindemittels verfestigt zu werden.

15. Träger nach Anspruch 12, **dadurch gekennzeichnet, dass** die Vliesstoffschichten (1, 2) aus Filamenten gebildet werden, die aus homopolymerem Material extrudiert werden und mit Filamenten vermischt werden, welche von einem niedrigschmelzenden Polymer extrudiert werden, und dass sie geeignet sind, mittels Thermobindung verfestigt zu werden.

16. Träger nach einem der vorangehenden Ansprüche, **dadurch gekennzeichnet, dass** die Verstärkungsfilamente (3) in einer Längsrichtung und/oder einer Diagonalrichtung angeordnet sind.

17. Träger nach einem der vorangehenden Ansprüche, **dadurch gekennzeichnet, dass** er eine Masse pro Flächeneinheit zwischen 50 gsm und 350 gsm hat.

## Revendications

1. Support textile pour membrane bitumeuse, et plus particulièrement pour l'étanchéification de bâtiments, qui comprend la combinaison d'au moins deux couches (1, 2) de polyester non tissé ou de matériau polymérique au sens général et d'une pluralité de filaments de renfort longitudinaux (3), lesdits filaments de renfort (3) ayant été traités au préalable avec un apprêt qui permet la formation de liaisons chimiques stables, qui ne sont pas fortement influencées par la température.

2. Support selon la revendication 1, **caractérisé en ce que** lesdites couches non tissées (1, 2) et lesdits filaments de renfort (3) sont liés grâce à l'action d'au moins un matériau de liaison.

3. Support selon la revendication 2, **caractérisé en ce que** lesdits filaments de renfort (3) se composent de fibres inorganiques, de préférence de fibres de verre, éventuellement combinées avec des filaments de renfort polymériques.

4. Support selon la revendication 1, **caractérisé en ce que** ledit apprêt se compose d'un mélange d'agents de silanisation et d'agents filmogéniques.

5. Support selon la revendication 4, **caractérisé en ce que** lesdits agents de silanisation peuvent appartenir à la famille des organosilanes et sont de préférence du glycidoxypropyltriméthoxysilane ou de l'aminopropyl-triméthoxysilane.

6. Support selon la revendication 4 ou 5, **caractérisé en ce que** lesdits agents filmogéniques se composent de résines ayant une base de polyesters insaturés ou saturés, ou un époxy, ou une base de polyuréthane.

7. Support selon l'une quelconque des revendications 4 à 6, **caractérisé en ce que** ledit apprêt permet la formation de ponts chimiques entre les groupes fonctionnels (hydroxydes ou carboxyles ou acryliques ou époxys) des fibres qui constituent la matrice polymérique, ou de la résine d'imprégnation et de la surface des fibres qui constituent le renfort.

8. Support selon l'une quelconque des revendications 4 à 7, **caractérisé en ce que** ledit apprêt est appliqué sur lesdits filaments de renfort à l'aide d'applicateurs cylindriques (4).

9. Support selon l'une quelconque des revendications 4 à 7, **caractérisé en ce que** ledit apprêt est appliqué sur lesdits filaments de renfort à l'aide d'humidificateurs guidables (5).

10. Support selon l'une quelconque des revendications 8 et 9, **caractérisé en ce que** ledit apprêt est fixé sur la surface dudit filament de renfort (3) à l'aide de dispositifs de fixation (6) avec des infrarouges, des ondes ultraviolettes ou des micro-ondes, ou simplement avec un chauffage à la vapeur ou des jets d'air surchauffé.

11. Support selon la revendication 2, **caractérisé en ce que** la résine qui constituent ledit matériau de liaison est une résine auto-réticulée sans formaldéhyde.

12. Support selon l'une quelconque des revendications 1 à 3, **caractérisé en ce que** lesdites couches non tissées (1, 2) se composent de couches de fibres polymériques et/ou synthétiques formés par peignage de fibres de bourre.

13. Support selon l'une quelconque des revendications 1 à 3, **caractérisé en ce que** lesdites couches non tissées (1, 2) se composent de couches de filaments polymériques, formées par filage direct (filées-liées).

14. Support selon la revendication 11, dans lequel lesdites couches non tissées (1, 2) sont formées par peignage de mélanges intimes de fibres polymériques et de fibres à faible point de fusion, de façon à pouvoir être consolidées par liaison thermique.

15. Support selon la revendication 12, dans lequel lesdites couches non tissées (1, 2) sont formées de filaments extrudés à partir d'homopolymère mélangé avec des filaments extrudés à partir d'un polymère à faible point de fusion, de façon à pouvoir être consolidées par liaison thermique.

16. Support selon l'une quelconque des revendications précédentes, **caractérisé en ce que** lesdits filaments de renfort (3) sont disposés dans une direction longitudinale et/ou diagonale.

17. Support selon l'une quelconque des revendications précédentes, **caractérisé en ce qu'**il possède une masse par unité de surface de l'ordre de 50 à 350 gsm.
